(19) Europäisches Patentamt
European Patent Office
Office européen des brevets

(11) EP 4 379 667 A1

(12) EUROPEAN PATENT APPLICATION

(43) Date of publication:
05.06.2024 Bulletin 2024/23

(51) International Patent Classification (IPC):
G06T 15/20 $^{(2011.01)}$    G06T 17/00 $^{(2006.01)}$

(21) Application number: 22210641.1

(22) Date of filing: 30.11.2022

(52) Cooperative Patent Classification (CPC):
G06T 15/20; G06T 17/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Applications Mobiles Overview Inc.
Montréal, Québec H4C 1P8 (CA)

(72) Inventors:
• JUPPE, Laurent
  Montreal H3J 2P7 (CA)
• MARTIN, Bryan
  Montreal H4C 1P8 (CA)
• ABUELWAFA, Sherif Esmat Omar
  Montreal H3C 0L7 (CA)

(74) Representative: BCF Global
Centre d'Entreprise et d'Innovation
56, Bd Niels Bohr
CS 52132
69603 Villeurbanne Cedex (FR)

(54) **SYSTEM AND METHOD FOR GENERATING THREE-DIMENSIONAL TRAINING DATA FROM LIMITED RECONSTRUCTED SAMPLES**

(57)    The disclosed systems and methods are directed to for obtaining partial three-dimensional (3D) data from an object-of-interest to generate a machine learning 3D objects training dataset. The features include accessing the object-of-interest, providing an imaging system, and applying at least a first operation on (i) the object-of-interest and/or (ii) the imaging system. The at least first operation executing a displacement-related function to the (i) the object-of-interest and/or (ii) the imaging system, and in response to the at least first operation, obtaining at least one partial 3D representation of the object-of-interest by the imaging system and supplying the obtained at least one partial 3D representation to the 3D objects training dataset.

FIG. 4A

EP 4 379 667 A1

## Description

## FIELD

The present technology relates to systems and methods of obtaining a three-dimensional (3D) objects training dataset.

## BACKGROUND

Creating and augmenting a 3D objects training dataset based on a small number of models is a difficult task. Conventional solutions are not cost-efficient and require specialized, cumbersome and costly techniques in terms of hardware requirement and software complexity.

Even though the recent developments identified above may provide benefits, improvements are still desirable.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

## SUMMARY

Embodiments of the present technology have been developed based on developers' appreciation of at least one technical problem associated with the prior art solutions.

In a first aspect, various embodiments of the present technology provide a method of obtaining three-dimensional (3D) obj ect training data, the method comprising: accessing an object-of interest; accessing an imaging system; applying the at least one operation on (i) an object-of-interest and/or (ii) an imaging system to obtain the at least one partial 3D representation of an object-of-interest associated with an object-of-interest, each of the at least one partial 3D representation of an object-of-interest having been obtained by an imaging system; and subsequently adding the at least one partial 3D representation of an object-of-interest to a 3D objects training dataset.

In some embodiments of the present technology, the object-of-interest is synthetic and/or non-synthetic.

In some embodiments of the present technology, the imaging system is real and/or virtual.

In some embodiments of the present technology, the at least one operation applied to (i) and/or (ii) is randomized.

In some embodiments of the present technology, the at least one operation applied to (i) an object-of-interest is determined; and the at least one operation applied to (ii) the imaging system to generate the at least one partial 3D representation of an object-of-interest is randomized.

In some embodiments of the present technology, the at least one operation applied to (i) an object-of-interest is randomized; and the at least one operation applied to (ii) the imaging system to generate the at least one partial 3D representation of an object-of-interest is determined.

In some embodiments of the present technology, the randomization of the at least one operation is limited.

In some embodiments of the present technology, a plurality of close-distance partial 3D reconstructions of an object-of-interest are combined to create a constituent 3D representation of the object-of-interest.

In some embodiments of the present technology, a plurality of close-distance partial 3D reconstructions of an object-of-interest are combined to create a partial 3D representation of the obj ect-of-interest.

In some embodiments of the present technology, the distance between a plurality of partial 3D reconstructions of an object-of-interest is limited.

In some embodiments of the present technology, the object-of-interest is non-rigid and contains the at least one articulation.

In some embodiments of the present technology, the at least one articulation contained in the object-of-interest contains the at least one degree of freedom.

In some embodiments of the present technology, applying the at least one operation on (i) an object-of-interest comprises, but is not limited to: rotation, position, displacement, articulation, geometric transformation, scale, translation, orientation, shape deformation, aiming point, and/or any combination thereof.

In some embodiments of the present technology, applying the at least one operation on (ii) the imaging system to obtain the at least one partial 3D representation of an object-of-interest comprises, but is not limited to: rotation, position, displacement, articulation, geometric transformation, scale, translation, orientation, shape deformation, aiming point, focal length, focal length range, pixel size, sensor size, position of the principal point, lens distortion, intrinsic parameters, extrinsic parameters, and/or any combination thereof.

In some embodiments of the present technology, the training of the at least one machine learning algorithm (MLA) is based at least in part on the 3D objects training dataset.

In some embodiments of the present technology, the training of the at least one machine learning algorithm (MLA) is based at least in part on the at least one partial 3D representation of an object-of-interest associated with an object-of-interest.

In the context of the present specification, unless expressly provided otherwise, a computer system may refer, but is not limited to, an "electronic device", an "operation system", a "system", a "computer-based system", a "controller unit", a "monitoring device", a "control device" and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of embodiments of the present technology will become apparent from the following description, the accompanying drawings, and the appended claims.

**BRIEF DESCRIPTION OF THE DRAWINGS**

These and other features, aspects and advantages of the present technology will be better understood with regard to the following description, claims and accompanying drawings where:

FIGs. 1A-C illustrate representations of 3D synthetic objects-of-interest;

FIG. 2 depicts a representative computing environment for executing a method of obtaining a three-dimensional (3D) obj ects-of-interest training dataset, in accordance with various embodiments of the present technology;

FIGs. 3A-B depict camera positioning and aiming point positions, in accordance with various embodiments of the present technology;

FIG. 4A depicts a representative processing architecture for executing the method of obtaining the 3D objects-of-interest training dataset, in accordance with various embodiments of the present technology;

FIG. 4B depicts a representative processing architecture for executing the method of obtaining and augmenting the 3D objects-of-interest training dataset, in accordance with various embodiments of the present technology;

FIG. 5 is an illustrative example of a plurality of partial 3D representations of an object-of-interest;

FIG. 6 depicts a representative example of fixed positioning of a 3D representation of an object-of-interest and a plurality of camera positions to obtain a plurality of partial 3D representations, in accordance with various embodiments of the present technology;

FIG. 7 depicts another representative example of further of fixed positioning of a 3D representation of an object-of-interest and a plurality of camera positions to obtain a plurality of partial 3D representations, in accordance with various embodiments of the present technology;

FIG. 8 depicts a plurality of camera positions located in a spherical configuration, in accordance with various embodiments of the present technology;

FIG. 9 depicts a positioning of a camera on a three-dimensional (3D) and/or two-dimensional (2D) shape, in accordance with various embodiments of the present technology;

FIG. 10 depicts a randomly positioned and oriented object-of-interest and oriented and the position of the camera is fixed, in accordance with various embodiments of the present technology;

FIG. 11 illustrates representative examples of non-rigid objects-of-interest;

FIG. 12 depicts a representative processing architecture for executing the method of obtaining the 3D objects-of-interest training dataset, in accordance with various embodiments of the present technology; and

FIG. 13 illustrates representative examples of combining a plurality of partial 3D representations to obtain a constituent 3D representation of the object-of-interest, in accordance with various embodiments of the present technology.

## DETAILED DESCRIPTION

Various implementations of the described technology will be described more fully hereinafter with reference to the accompanying drawings. The present technology may, however, be embodied in many different forms and should not be construed as limited to the implementations set forth herein. Rather, these implementations are provided so that the disclosure will be thorough and complete, and will fully convey the scope of the disclosed technology to those skilled in the art. In the drawings, the sizes and relative sizes of layers and regions may be exaggerated for clarity. Like numerals refer to like elements throughout.

It will be understood that, although the terms first, second, third etc. may be used herein to describe various elements, these elements should not be limited by these terms. These terms are used to distinguish one element from another. Thus, a first element discussed below could be termed a second element without departing from the teachings of the disclosure. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is only intended to describe particular implementations and is not intended to be limiting of the present inventive concept. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any step diagrams, flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional step labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

In the context of the present technology, a "3D representation of a 3D object-of-interest" may refer to a digital 3D model of the object-of-interest under the form of a digital file or a digital group of files that describe the 3D geometry of the object-of-interest. The description of an object's 3D geometry is given in terms of a collection of points in a 3D space (hereafter called "vertices", singular: "vertex"), those vertices being connected or not by various geometry entities such as triangle lines, planar or curved surfaces, etc., 3D models may be created by hand, algorithmically or scanned. The formats of those digital files are numerous and the technology is compatible to the most common ones.

### *Synthetic Objects*

In the context of the present technology, a "synthetic object" may refer to, but is not limited to, synthetic 3D models, CAD, 3D models acquired from industrial oriented 3D software, medical oriented 3D software, and/or non-specialized 3D software, 3D models generated by processes such as RGB photogrammetry, RGB-D photogrammetry, and/or other reconstruction techniques from real objects.

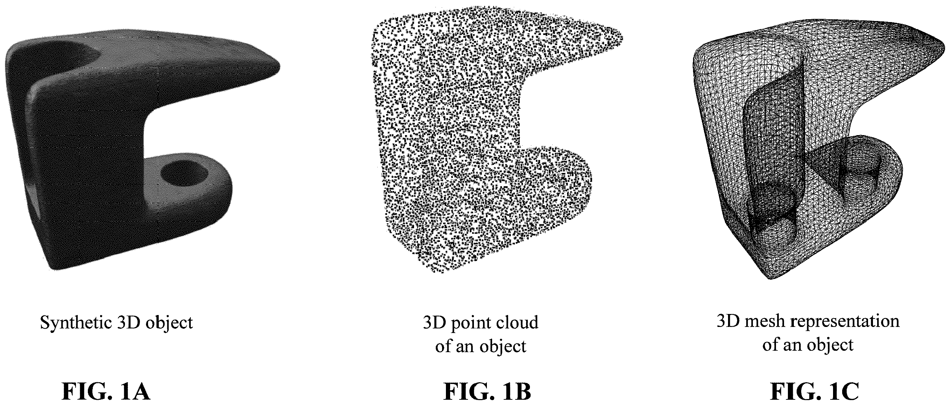

FIG. 1A-C illustrate representative examples of 3D synthetic objects-of-interest. FIG. 1A illustrates a generic synthetic 3D CAD model of a 3D object-of-interest; FIG. 1B illustrates a generic 3D point cloud of a 3D object-of-interest; and FIG. 1C illustrates a generic 3D mesh representation of a 3D object-of-interest.

In the context of the present technology, a "3D point cloud" may refer to a simple 3D representation of an object-of-interest where the vertices are not necessarily connected to each other. If they are not connected to each other, the basic information contained in this kind of representation are the coordinates (e.g., x, y, z) within a Cartesian coordinate system of each vertex. Other information may be contained, such as vertices color (e.g., r, g, b) within an RGB color space. A 3D point cloud is the simplest representation of a 3D object-of-interest and the present embodiments are compatible with 3D point clouds. The 3D point cloud is often used as the result of a 3D scanning and a very common format for those files is the Polygon File Format (PLY).

### Non-Synthetic Objects

In the context of the present technology, a "non-synthetic object" may refer to any object in the real-world. Non-synthetic objects are not synthesized by any computer rendering techniques, rather they are scanned and/or captured by any non-limiting means such as an optical sensor, camera, depth sensor, or the like, to generate or reconstruct 3D point cloud representation of the non-synthetic 3D object-of-interest using any "off the shelf" technique, including but not limited to photogrammetry, machine learning based techniques, depth maps or the like. Certain non-limiting examples of a non-synthetic 3D object-of-interest may be any real-world objects such as a computer screen, a table, a chair, a coffee mug or a mechanical component on an assembly line, any type of inanimate object or even any type of animal, a plant.

The present disclosure illustrates embodiments of the technology focusing on obtaining a 3D objects-of-interest training dataset. Such machine learning techniques typically require a large volume of training data to properly train the machine learning algorithms (MLAs). In one context, the MLA may be a 3D objects classifier aiming at identifying 3D objects-of-interest based on 3D point cloud representations of a scanned object. In order to provide sufficient reliability, the MLAs have to be trained on a large database of 3D representations of objects-of-interest, also referred to as 3D objects training dataset.

The issues addressed by the present technology relates to the creation of partial and complete 3D objects-of-interest training dataset so that the 3D objects training dataset contains a large enough number of entries from a limited or small number of samples or models (e.g., one model per "class", a "class" being a given object) to ensure proper training of the MLAs. In so doing, the present technology may therefore provide a cost-efficient approach to the creation of the 3D objects-of-interest training dataset having a large enough number of entries using the 3D objects training dataset with a small number of initial entries which would have otherwise required specialized, cumbersome, and costly techniques in terms of hardware requirement and software complexity.

It will be appreciated that 3D representation has several benefits over 2D representation of any object. Such benefits include, but are not limited to:

(1) 3D representation has better denoising and/or segmentation capabilities as compared to 2D representations; and/or

(2) 3D representation provides flexibility in terms of working on purely geometrical features; and/or

(3) 3D representation is generally independent of background, lightning, depth of field, motion blur, and/or other purely 2D features; and/or

(4) 3D representation has better performance over 2D representation various in tasks (e.g., classification, recognition, detection, segmentation, etc.) where many objects with different sizes, but the same shape need to be processed (i.e., classified, recognized, etc.); and/or

(5) Several 3D based machine learning algorithms are based on 3D features (e.g., dimensions, normals, scale, etc.) in which such features well-describe the processed objects in many real-world applications and 2D representation lacks features lack such quality; and/or

(6) 3D representation of an object allows a 360° access and provides detailed information about the 3D geometry of objects which cannot be captured with 2D representation.

With these fundamentals in place, we will now consider some non-limiting examples to illustrate various implementations of aspects of the present technology.

### Computing Environment

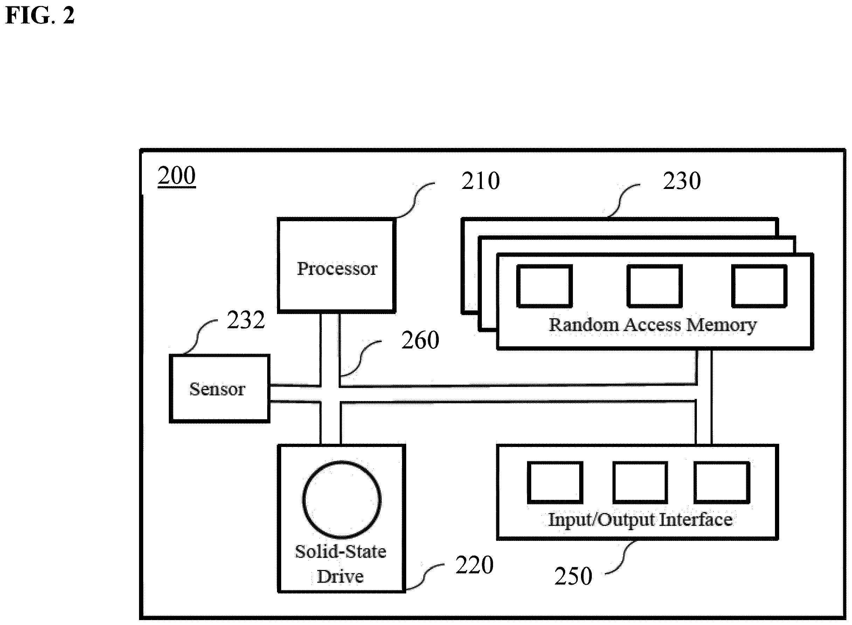

FIG. 2 illustrates a representative computing environment 200, in accordance with an embodiment of the present technology. In some embodiments, the computing environment 200 may be implemented by any of a conventional personal computer, a computer dedicated to generating the 3D representation of objects, a remote server and/or an electronic device, such as, but not limited to, a mobile device, a tablet device, a server, a controller unit, a control device, a monitoring device, etc. and/or any combination thereof appropriate to the relevant task at hand. In some embodiments, the computing environment 200 comprises various hardware components including one or more single or multi-core processors collectively represented by a processor 210, a solid-state drive 220, a random access memory 230, a sensor 232 and an input/output interface 250.

The computing environment 200 may be specifically configured to generate a 3D representation of objects-of-interest. Further, the computing environment 200 may generate 3D point cloud from the 3D representation objects-of-interest. In some alternative embodiments, the computing environment 200 may be a generic computer system, laptop, tablets, smart phones, desktops, or the like.

In some embodiments, the computing environment 200 may also be a sub-system of one of the above-listed systems. In some other embodiments, the computing environment 200 may be an "off the shelf' generic computer system. In some embodiments, the computing environment 200 may also be distributed amongst multiple systems. In some embodiments, the computing environment 200 is virtualized in the "cloud" so that processing power and/or memory capacity may be scaled up or down depending on actual needs for executing implementations of the present technology.

The computing environment 200 may also be specifically dedicated to the implementation of the present technology. In some embodiments, the computing environment 200 may be configured to operate in offline mode and all the operations may be performed locally on the computing environment 200 without any need of communication with an external server/cloud. In the offline mode, the computing environment 200 may also be configured to share its data with the server/cloud whenever a connection to the network is ready. In some embodiments, the computing environment 200 may be configured to operate to perform at least some of its operations in online mode that is, the computing environment 200 may be connected to a network to increase processing power and/or memory capacity. As a person in the art of the present technology may appreciate, multiple variations as to how the computing environment 200 is implemented may be envisioned without departing from the scope of the present technology.

Communication between the various components of the computing environment 200 may be enabled by one or more internal and/or external buses 260 (e.g., a PCI bus, universal serial bus, IEEE 1394 "Firewire" bus, SCSI bus, Serial-ATA bus, ARINC bus, etc.), to which the various hardware components are electronically coupled.

The input/output interface 250 may allow enabling networking capabilities such as wire or wireless access. As an example, the input/output interface 250 may comprise a networking interface such as, but not limited to, a network port, a network socket, a network interface controller and the like. Multiple examples of how the networking interface may be implemented are apparent to the person skilled in the art of the present technology.

For example, but without being limitative, the networking interface may implement specific physical layer and data link layer standard such as Ethernet, Fibre Channel, Wi-Fi or Token Ring. The specific physical layer and the data link layer may provide a base for a full network, allowing communication among small groups of computers on the same local area network (LAN) and large-scale network communications through routable protocols, such as Internet Protocol (IP).

In accordance with implementations of the present technology, the solid-state drive 220 stores program instructions suitable for being loaded into the random access memory 230 and executed by the processor 210 for augmenting the 3D objects training dataset. For example, the program instructions may be part of a library, an application, API, framework, software as a service (SaaS) or the like. The solid-state drive 220 may also store various databases including 3D objects training dataset, metadata, user information such as login, activity history or the like.

*Camera & Aiming Point*

As depicted by FIG. 2, the computing environment 200 incorporates sensor 232. The sensor 232 may be any device configured to optically capture or scan images of its surroundings. Some of the non-limiting examples of the sensor 232 includes a camera, a depth sensor, an optical sensor, an image sensor, an image capturing device, or the like.

In some embodiments, the sensor 232 may be a virtual camera.

In some embodiments, the position of a real and/or virtual camera may be defined in a 3D coordinate system (e.g., x, y, z in the case of a Cartesian coordinate system).

In some embodiments, the aiming point is the 3D coordinate at which the camera is aimed. The position of the aiming point may be defined in a 3D coordinate system (e.g., x, y, z ) in a Cartesian coordinate system.

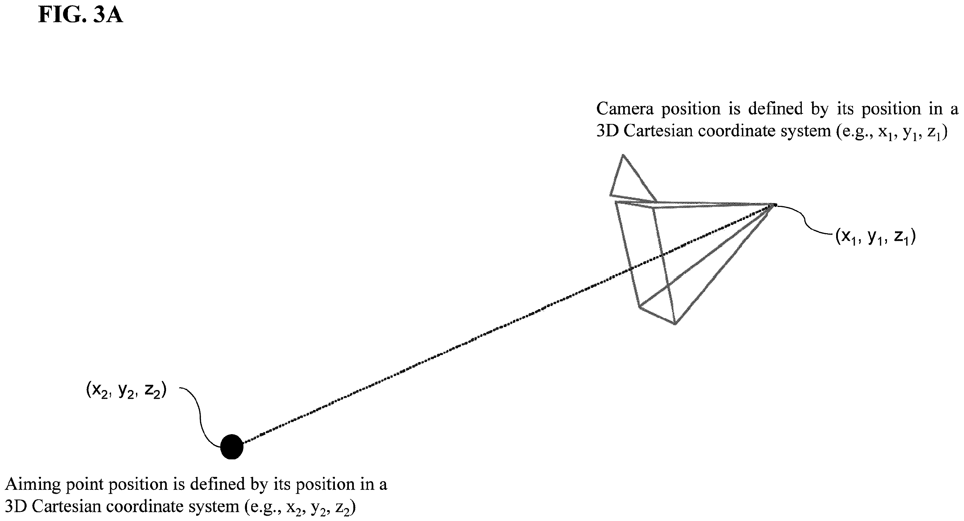

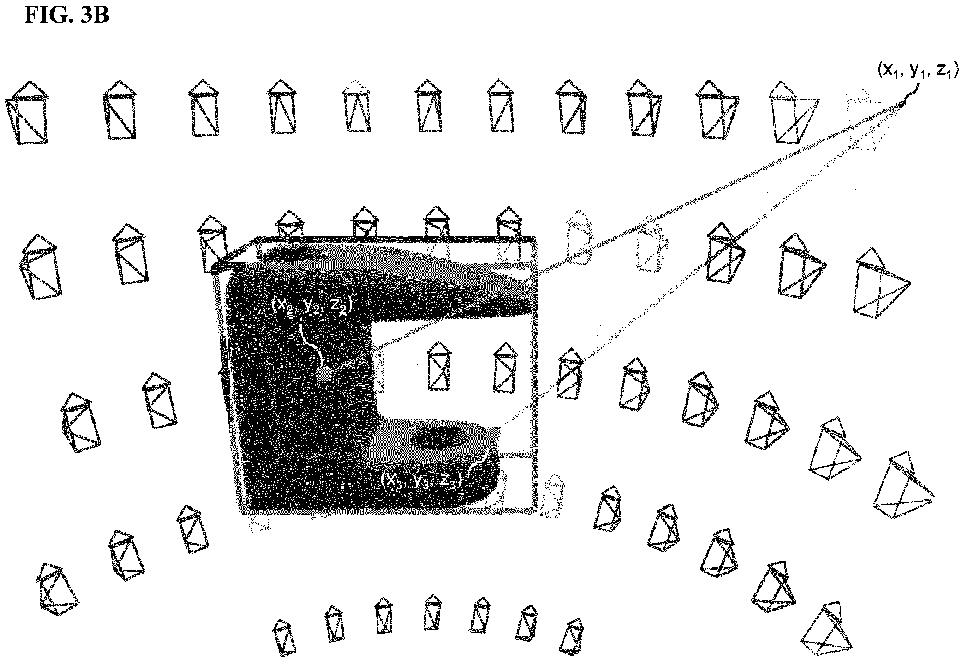

FIG. 3A depicts a camera position and an implemented aiming point, in accordance with the present technology. FIG. 3B depicts a camera position and a plurality of aiming points located on a synthetic 3D model, in accordance with the present technology.

In some embodiments, the extrinsic parameters may be the location and the orientation of the camera in its environment. In some other embodiments, the camera may be defined by its position and aiming point.

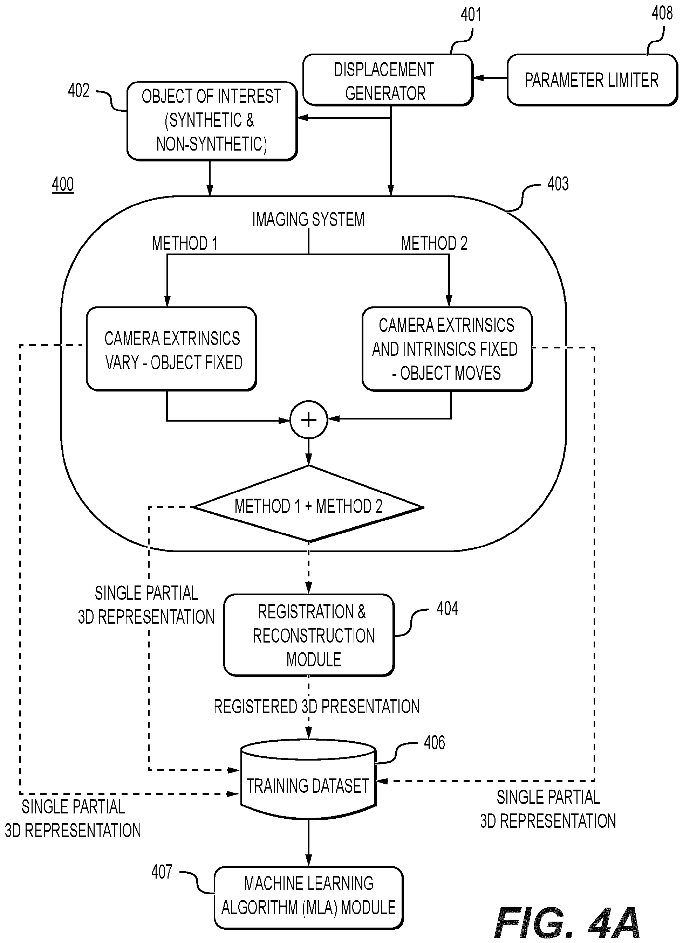

FIG. 4A depicts a representative processing architecture 400 for executing the method of obtaining the 3D objects training dataset, in accordance with various embodiments of present technology. As shown, the processing architecture 400 includes displacement generator 401, parameter limiter 408, object-of-interest 402, imaging system 403, reconstruction module 404, training dataset 406, and machine learning algorithm (MLA) module 407. It is to be noted that other components may be present but not illustrated for the purposes of tractability and simplicity. Further, it will be appreciated that the various components associated with the computing architecture 400 may be executed on the computing environment 200 such as displacement generator 401, object-of-interest 402, imaging system 403, training dataset 406, and machine learning algorithm (MLA) module 407 may be executed on the processor 210 by program instructions having been loaded, for example, into random access memories. Also, the training dataset store 406 may be stored and accessed from the solid-state drive 220.

In some embodiments, object-of-interest 402 may be synthetic and/or non-synthetic.

In some embodiments, imaging system 403 may comprise at least one virtual camera or a plurality of virtual cameras.

In further embodiments of method 400, imaging system 403 may comprise at least one real camera or a plurality of real cameras.

The method 400 begins wherein displacement generator 401 applies at least one operation on object-of-interest 402 and/or imaging system 403 to obtain at least one partial 3D representation of object-of-interest 402. The at least one operation applied by displacement generator 401 on object-of-interest 402 to obtain the at least one partial 3D representation of an object-of-interest 402 may comprise, but is not limited to, rotation, position, displacement, articulation, geometric transformation, scale, translation, orientation, shape deformation, aiming point, size, scale-agnostic transformation matrix operations, reflection tessellation similarity of the at least one threshold of the at least one partial 3D representation of an object-of-interest, mathematical operation, geometric operation, quaternion, Euler angle, angle, shape deformation, curvature, normal, extrusion, 3D vertex displacement, or some combination thereof. It is to be noted that any one or more these operations may be applied and in case of more than one transformation, the order in which these transformations may be applied should not limit the scope of the present disclosure.

In certain embodiments, parameter limiter 408 may limit the at least one operation of displacement generator 401 to provide incremental positional changes to the object-of-interest 402 and/or the imaging system 403. For example, parameter limiter 408 may limit the operation of the displacement generator 401 to constrain the imaging system 403 to follow certain position constraints and/or equations of a 3D solid, a shape and/or a trajectory. In a further example of a sphere, the displacement generator 401 may generate two random parameters in a Cartesian coordinate system (e.g., x and y), with the third one (e.g., z) being obtained from the sphere equation. In yet another example, parameter limiter 408 may limit the at least one operation of displacement generator 401 to constrain the position of object-of-interest 402 to remain in the frame of imaging system 403.

The at least one partial 3D representation of object-of-interest 402 may then be obtained by imaging system 403. As shown in FIG. 4A and described in greater detail below regarding other aspects of the present technology, in obtaining the partial 3D representation of object-of-interest 402, the imaging system 403 may operate such that the position of the object-of-interest is randomized or varied while the imaging system remains positionally fixed. Additionally, the imaging system 403 may operate such that the position of the imaging system 403 is randomized or varied while the object-of-interest remains positionally fixed. In the depicted embodiment, both operational processes are implemented and combined to render the partial 3D representation of object-of-interest 402. It will be appreciated that how partial 3D representation of object-of-interest 402 is obtained by imaging system 403 should not limit the scope of the present technology.

Once the partial 3D representation of object-of-interest 402 is obtained, the method 400 may add the partial 3D representation of object-of-interest 402 to the training dataset 406 as a part of a 3D objects training dataset 406. In certain embodiments, training dataset 406 may be used to train machine learning algorithm (MLA) 407 to identify the at least one synthetic and/or non-synthetic object-of-interest.

Additionally, the obtained partial 3D representation of the object-of-interest 402 may be supplied to the reconstruction module 404 that is configured to combine, integrate, and/or overlap multiple obtained partial 3D representations to generate a constituent 3D reconstruction of the object-of-interest. In certain embodiments, the distances between the plurality of the partial 3D representations of the object-of-interest 402 or features thereof, may be limited to facilitate the generation of the constituent 3D reconstruction.

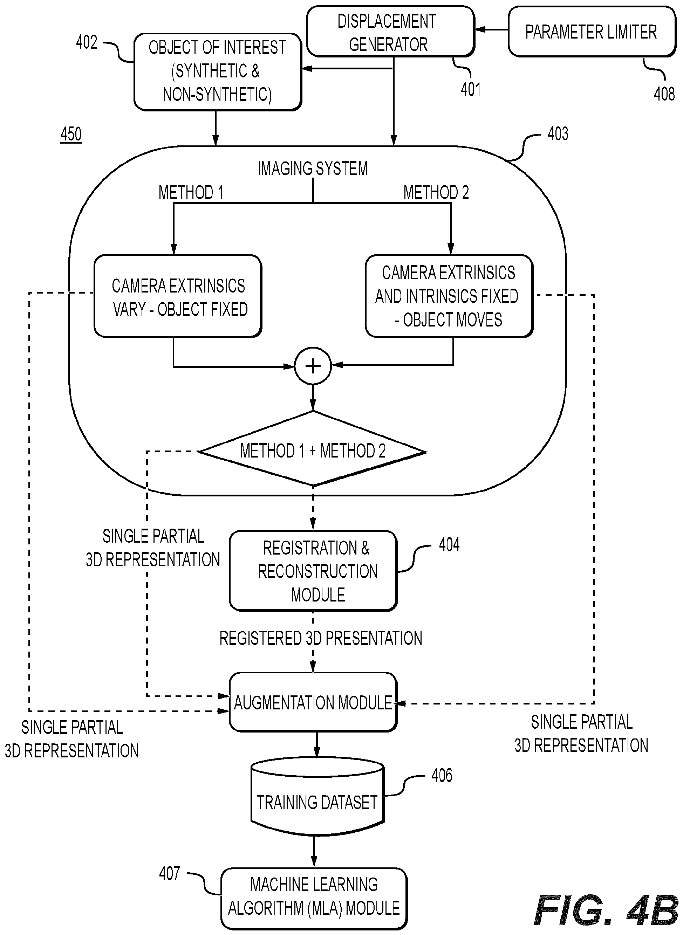

FIG. 4B depicts a representative processing architecture 450 for executing the method of obtaining and augmenting the 3D objects-of-interest training dataset, in accordance with an additional embodiment of the present technology. It is to be noted that the processing architecture 450 shares many elements with the processing architecture 400 of FIG. 4A, so for purposes of tractability and simplicity, descriptions of the shared elements will not be duplicated.

With this said, representative processing architecture 450 further incorporates augmentation module 409. The augmentation module 409 is configured to apply at least one operation to the one object-of-interest and/or the at least on partial 3D representation and/or the at least one constituent 3D representation. These operations may include, but are not limited to, an augmentation routine comprising randomly selecting an execution order of at least one of (i) adding a noise to the point cloud of the at least one object-of-interest, (ii) applying a geometric transformation on the point cloud of the at least one object-of-interest, and/or (iii) applying a degradation on the point cloud of the at least one object-of-interest. The augmentation module 409 is further configured to apply the randomly selected execution order of steps (i) to (iii) on the point cloud of the at least one object-of-interest and/or the at least on partial 3D representation and/or the at least one constituent 3D reconstruction.

*Randomization Process*

In some embodiments, the at least one operation of displacement generator 401 applied to object-of-interest 402 and/or imaging system 403 to obtain the at least one partial 3D representation of object-of-interest 402 is randomized.

In some embodiments, wherein the at least one operation of displacement generator 401 applied to object-of-interest 402 and/or imaging system 403 is randomized, the displacement of object-of-interest 402 may cause the position of object-of-interest 402 to be partially outside the camera frame of imaging system 403. In such cases, the portion of the object-of-interest included within and/or without the camera frame is determined. A non-limiting example to determine the portion of the object-of-interest that exists within or without the camera frame may utilize a percentage of the total number of vertices contained in a 3D representation of the object-of-interest.

*Random Camera*

In some embodiments, the at least one operation of displacement generator 401 applied to object-of-interest 402 to obtain the at least one partial 3D representation of object-of-interest 402 is determined; and the at least one operation of displacement generator 401 applied imaging system 403 to obtain the at least one partial 3D representation of object-of-interest 402 is randomized.

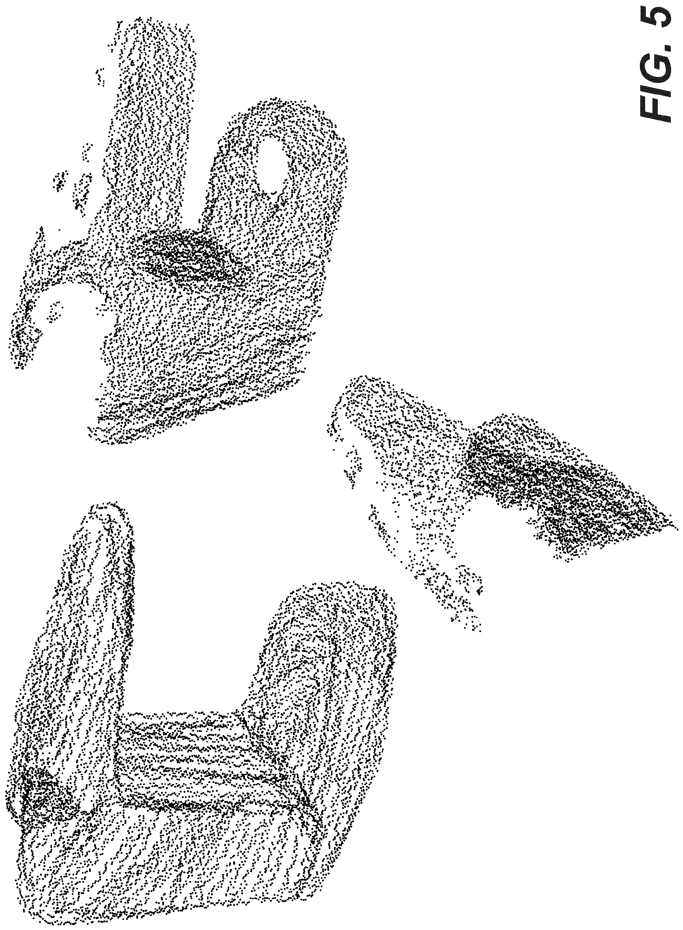

FIG. 5 is an illustrative example of a plurality of partial 3D representations of an object-of interest obtained in one embodiment of method 400.

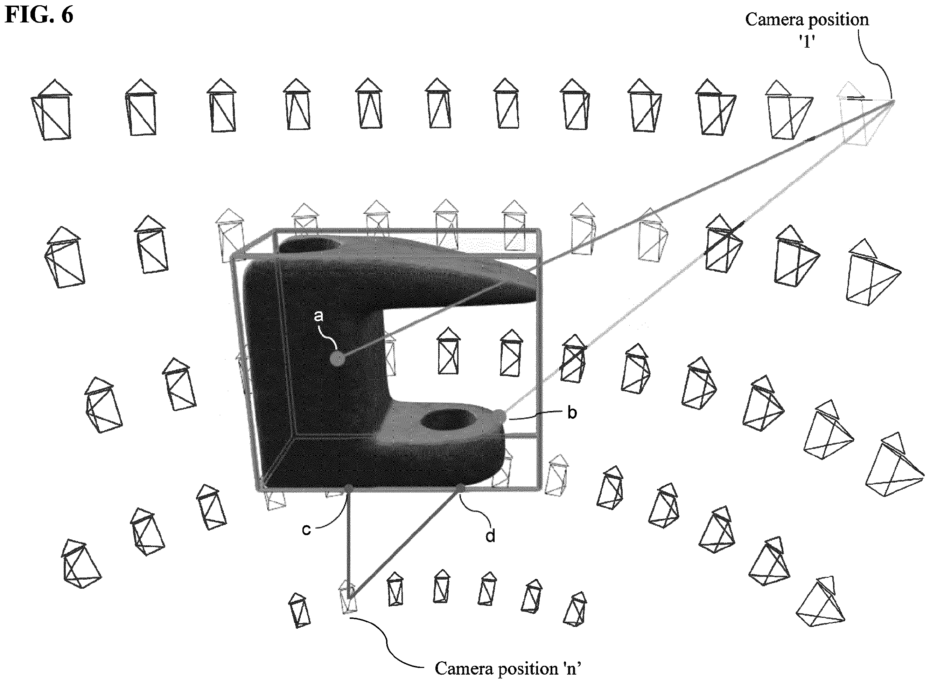

FIG. 6 is an illustrative example, wherein the position of a 3D representation of object-of interest is fixed, and a plurality of camera positions 1-n is applied from displacement generator 401 to imaging system 403 to obtain the plurality of partial 3D representations.

In further reference to FIG. 6, wherein the position of a 3D representation of object-of-interest is fixed, and a plurality of aiming points a-d is applied from displacement generator 401 to imaging system 403 to obtain the plurality of partial 3D representations.

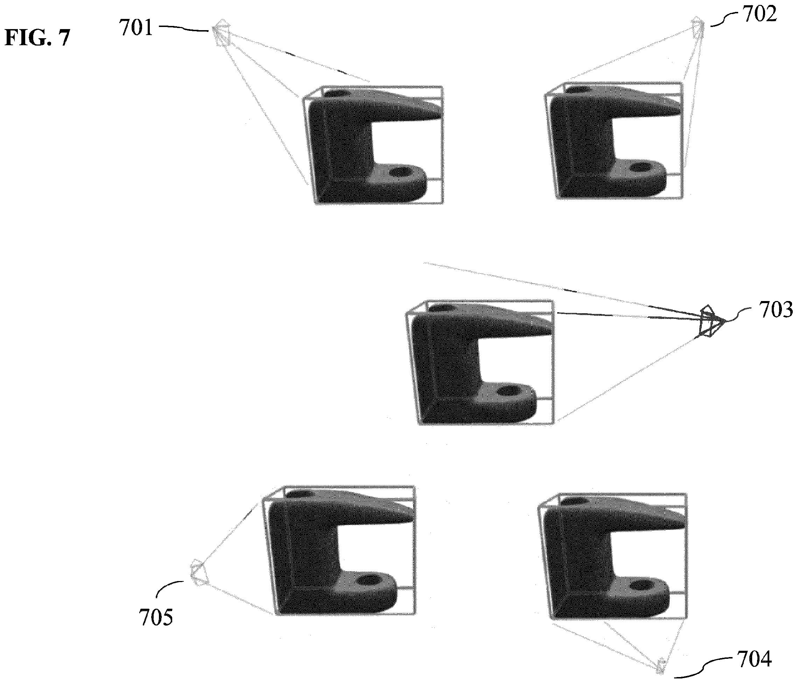

FIG. 7 is a further illustrative example of a plurality of camera positions, 701-705, applied from displacement generator 401 to imaging system 403 to obtain a plurality of partial 3D representations.

In some embodiments, the size of the object-of-interest 402 is utilized as a reference for displacement generator 401 and/or imaging module 403.

In some embodiments, the position of the centroid, center of gravity, mass center, and/or bounding box center of the object-of-interest 402 is utilized as a reference for displacement generator 401 and/or imaging module 403.

In some embodiments, the bounding box diagonal of the object-of-interest 402 is utilized as a reference for displacement generator 401 and/or imaging module 403.

*Sphere*

In some embodiments, the plurality of positions (e.g., x, y, z in the case of a Cartesian coordinate system) applied by displacement generator 401 to imaging system 403 to obtain the at least one partial 3D representations of an object-of-interest 402 is located on a sphere. The center of gravity of the sphere may be referenced to the center of gravity of the 3D object-of-interest. The equation to determine the center of gravity of a sphere is $(x-x_{cg})^2 + (y-y_{cg})^2 + (z-z_{cg})^2 = r^2$, wherein 'r' is the radius of the sphere; the coordinates of the center of gravity of the object-of-interest are $(x_{cg}; y_{cg}; z_{cg})$. It is to be noted that coordinates $(x_{cg}; y_{cg}; z_{cg})$ may also be, but are not limited to, the geometrical center, center of mass, and/or the bounding box center of the 3D object-of-interest.

In some embodiments, the radius of the sphere is a factor of the largest dimension of the 3D object-of-interest, wherein the largest dimension of the object-of-interest is the diagonal of its bounding box.

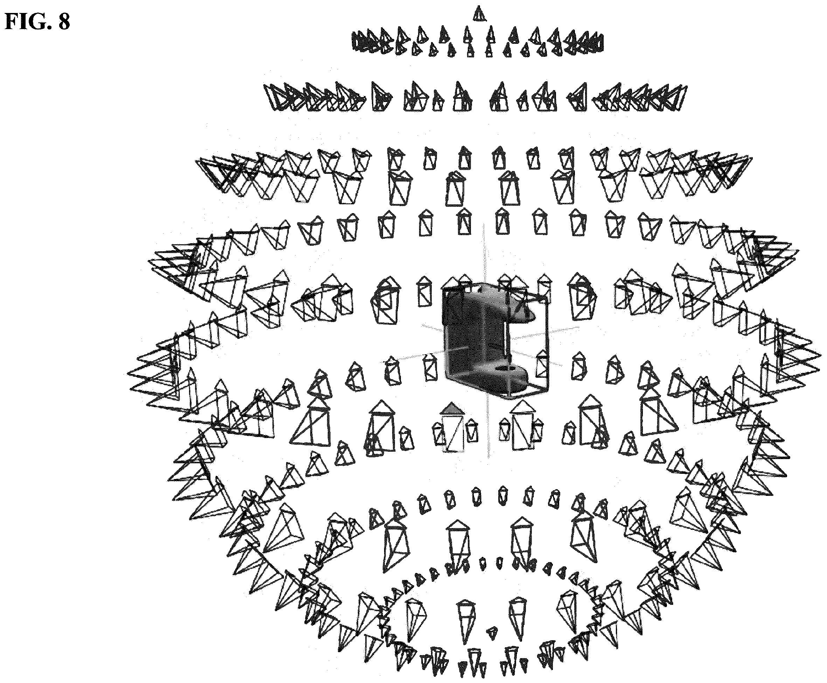

FIG. 8 is an illustrative example a plurality of camera positions located on a sphere applied by displacement generator 401 to imaging system 403 to obtain the at least one partial 3D representations of a 3D object-of-interest.

In some embodiments, the aiming point of the camera is fixed on the centroid of the 3D object-of-interest.

In some embodiments of the method 400, the aiming point of the camera is referenced to the center of gravity of the 3D object-of-interest.

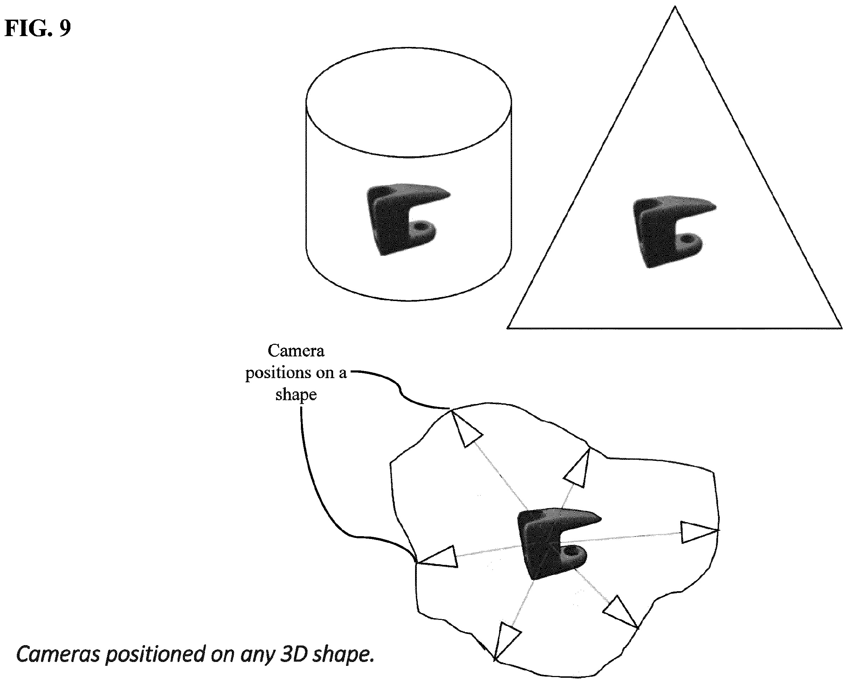

In some embodiments, the camera may be positioned on the at least one three-dimensional (3D) and/or two-dimensional (2D) shape, wherein the shape is represented by a mathematical equation. Shapes may include, but are not limited to, a circle, a square, a triangle, a cylinder, a cone, a cube, or any parametrical 3D surface or curve. FIG. 9 is an illustration of a non-limiting example of the current technology.

In some embodiments, a random camera position is combined with a random aiming point, wherein the random aiming point is under the constraint that the object-of-interest must remain in the camera frame and/or the aiming point is constrained to stay inside the bounding box of the 3D object-of-interest.

In some embodiments, the origin of the coordinate system (e.g., x, y, z in the case of a Cartesian coordinate system) utilized by displacement generator 401 and/or imaging system 403 is determined by the centroid of the 3D object-of-interest. For example, the camera extrinsic parameters may be defined according to the at least one Euler angle and/or the at least one quaternion representation, wherein the camera extrinsic parameters are constrained by the distance to the centroid of the 3D object-of-interest.

In some embodiments, wherein the camera is positioned on a three-dimensional (3D) and/or two-dimensional (2D) shape, displacement generator 401 may apply random deformations to the global shape parameters. Some non-limiting examples of global shape parameters may include radius, height, angles, circumference, and/or length.

In some embodiments, wherein the camera is positioned on a three-dimensional (3D) and/or two-dimensional (2D) shape, displacement generator 401 may apply random deformations to the local shape parameters. Some non-limiting examples of global shape parameters may include curvature, normal, orientation, and/or extrusion.

### *Random Object*

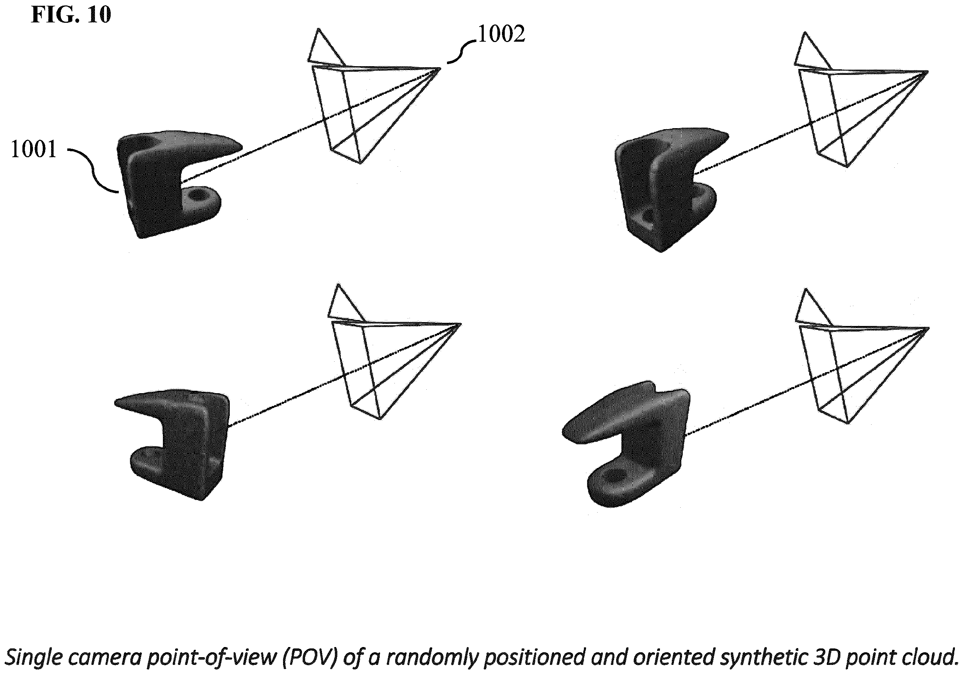

In some embodiments, the at least one operation of displacement generator 401 applied to object-of-interest 402 to obtain the at least one partial 3D representation of object-of-interest 402 is randomized; and the at least one operation of displacement generator 401 applied imaging system 403 to obtain the at least one partial 3D representation of object-of-interest 402 is determined. FIG. 10 is an illustrative example, wherein object-of-interest 1001 is randomly positioned and oriented, and the position of camera 1002 is fixed

In some embodiments, wherein the at least one operation applied by displacement generator 401 on object-of-interest 402 to obtain the at least one partial 3D representation of an object-of-interest 402 may comprise, but is not limited to, rotation, position, displacement, articulation, geometric transformation, scale, translation, orientation, shape deformation, aiming point, size, scale-agnostic transformation matrix operations, reflection tessellation similarity of the at least one threshold of the at least one partial 3D representation of an object-of-interest, mathematical operation, geometric operation, quaternion, Euler angle, angle, shape deformation, curvature, normal, extrusion, 3D vertex displacement, or some combination thereof. It is to be noted that any one or more these operations may be applied and in case of more than one transformation, the order in which these transformations may be applied should not limit the scope of the present disclosure.

In some embodiments, the operation of rotation applied by displacement generator 401 on object-of-interest 402 to obtain the at least one partial 3D representation of object-of-interest may include random values. Non-limiting examples of random rotation values may include degrees (e.g., 0° to 360°), radians, grades, or any relevant value unit.

In some embodiments, the at least one rotation applied by displacement generator 401 on object-of-interest 402 to obtain a plurality of partial 3D representation of object-of-interest 402 includes non-constrained, random values, wherein the non-constrained random values exceed the limits of the current technology. In such instance, modulo operations are utilized to return the non-constrained random values to a conventional range within the limits of the current technology.

In some embodiments, the reference position of the 3D object-of-interest is determined by the Cartesian coordinates of its center of gravity (e.g., (x; y; z)) and any orientation defined by three local Euler angles of its bounding box (*e.g.,* $(\theta; \phi; \psi)$).

In some embodiments, the reference position of the 3D object-of-interest is determined by the Cartesian coordinates of its center of gravity (e.g., (x; y; z)) and any orientation defined by quaternion matrices describing a rotation of a defined angle around a specified vector.

In some embodiments, the at least one orientation, position and/or rotation applied by displacement generator 401 on object-of-interest 402 to obtain the at least one partial 3D representation of object-of-interest 402 is determined by Cartesian coordinates in a world coordinate system.

In some embodiments, the at least one orientation, position and/or rotation applied by displacement generator 401 on object-of-interest 402 to obtain the at least one partial 3D representation of object-of-interest 402 is determined by Cartesian coordinates in a local coordinate system.

### *Gimbal Lock Rotations*

In some embodiments, the at least one orientation, position and/or rotation applied by displacement generator 401 on object-of-interest 402 to obtain the at least one partial 3D representation of object-of-interest 402 is determined by the relative rotations of the object in a local coordinates system, also known as gimbal lock rotations or Euler rotations.

In some embodiments, the at least one orientation, position and/or rotation applied by displacement generator 401 on object-of-interest 402 to obtain the at least one partial 3D representation of obj ect-of-interest 402 is determined by quaternion units and/or any mathematical notation for representing spatial orientations and rotations in three-dimensional space, and more specifically, axis-angle rotation around an arbitrary axis.

In some embodiments, the object-of-interest 402 is located within a virtual sphere, wherein (i) the virtual sphere is referenced to the center of gravity of object-of-interest 402; (ii) the radius of the virtual sphere is determined by the diagonal of a bounding box containing object-of interest 402, and the intrinsic parameters of the camera contained in imaging system 403.

In some embodiments, the intrinsic camera parameters of (ii) are randomized.

In some embodiments, wherein the object-of-interest 402 is located within a virtual sphere, the radius $R_s$ of the virtual sphere is calculated by:

$$Rs = D_0 \times tan\left(\frac{\alpha}{2}\right) - \frac{L_d}{2}$$

to maintain object-of-interest 402 within the camera frame, wherein '$\alpha$' defines the vision angle and is a camera intrinsic parameter; '$L_d$' defines the maximum object dimension and the bounding box diagonal; and '$D_0$' defines the distance between the object and the camera.

### Non Rigid Objects

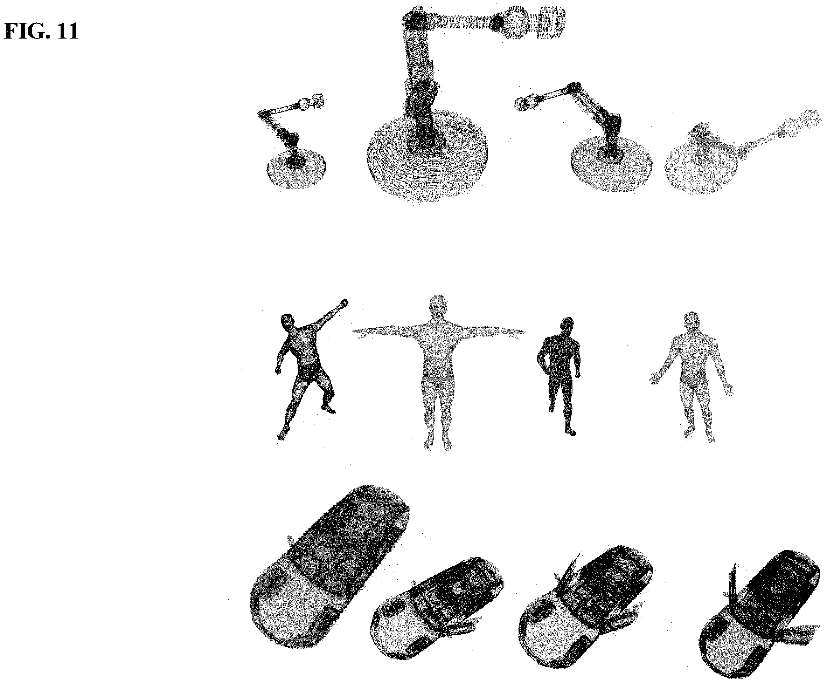

In some embodiments, object-of-interest 402 may be a non-rigid object containing several rigid parts attached to one another and articulated to allow a plurality of representations of the object-of-interest 402. A non-rigid object is defined as an assembly of rigid parts connected by the at least one articulation offering up to 3 degrees of freedom in rotation. Examples of non-rigid objects include, without limitation, a human body or human body parts (*e.g.,* arm, finger, spine, *etc.*), vehicles with doors, robotic arms, articulated industrial parts, and the like. FIG. 11 provides illustrative examples of such non-rigid objects.

In some embodiments, in which the object-of-interest 402 may be a non-rigid object, the at least one operation applied by displacement generator 401 may include the at least on angle to determine the at least one articulation of a non-rigid object-of-interest 402.

In some embodiments, in which the object-of-interest 402 may be a non-rigid object, the at least one operation applied by displacement generator 401 to a non-rigid object-of-interest 402 may determine the at least one iteration of a non-rigid object-of-interest 402.

In some embodiments, in which the object-of-interest 402 may be a non-rigid object, a plurality of operations applied by displacement generator 401 to a non-rigid object-of-interest 402 may determine a plurality of iterations of a non-rigid object-of-interest 402.

In some embodiments, in which the object-of-interest 402 is a non-rigid object, parameter limiter 408 limits the at least one operation applied by displacement generator 401 on non-rigid object-of-interest 402 and/or imaging module 403.

### Real Objects & Cameras

In some embodiments, the at least one partial 3D representations of an object-of-interest may be obtained utilizing non-synthetic objects and real cameras. For example, the displacement generator 401 may determine the at least one position of a non-synthetic object and/or a real camera.

In some embodiments, the displacement generator 401 may determine the at least one position of real world devices, such as, but not limited to gimbal sets, robotic arms, rotating trays, conveyor belts, endless screws, pistons, plunger to obtain the at least one partial 3D representations of an object-of-interest.

### Registration

In some embodiments, a plurality of partial 3D representations of an object-of-interest may be combined to create a constituent 3D representation of the object-of-interest. In some embodiments, a plurality of partial 3D representations of an object-of-interest may be combined to create a partial 3D reconstruction of the object-of-interest.

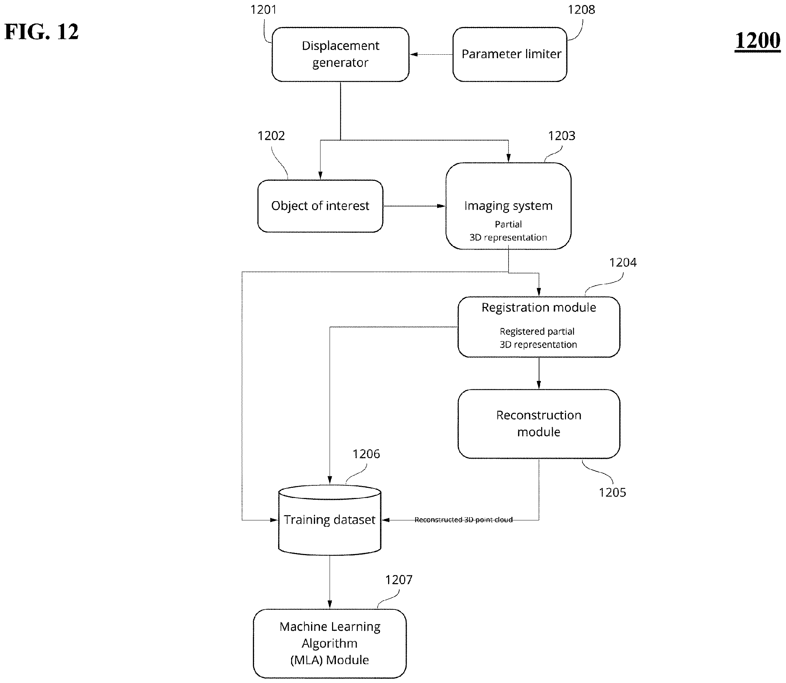

FIG. 12 depicts an additional representative processing architecture 1200 for executing the method of obtaining the 3D objects-of-interest training dataset regarding registration and reconstruction, in accordance with various embodiments of the present technology. It is to be noted that processing architecture 1200 shares many elements with the processing architecture 400 of FIG. 4A, so for purposes of tractability and simplicity, descriptions of the shared elements will not be duplicated.

As shown, representative processing architecture 1200 additionally incorporates registration module 1204 and reconstruction module 1205. The registration module 1204 is configured to capture and register the plurality of obtained partial 3D representations. In concert, the reconstruction module 1205 is configured to to combine, integrate, and/or overlap multiple obtained closely-spaced partial 3D representations to generate a constituent 3D reconstruction of the object-of-interest 202.

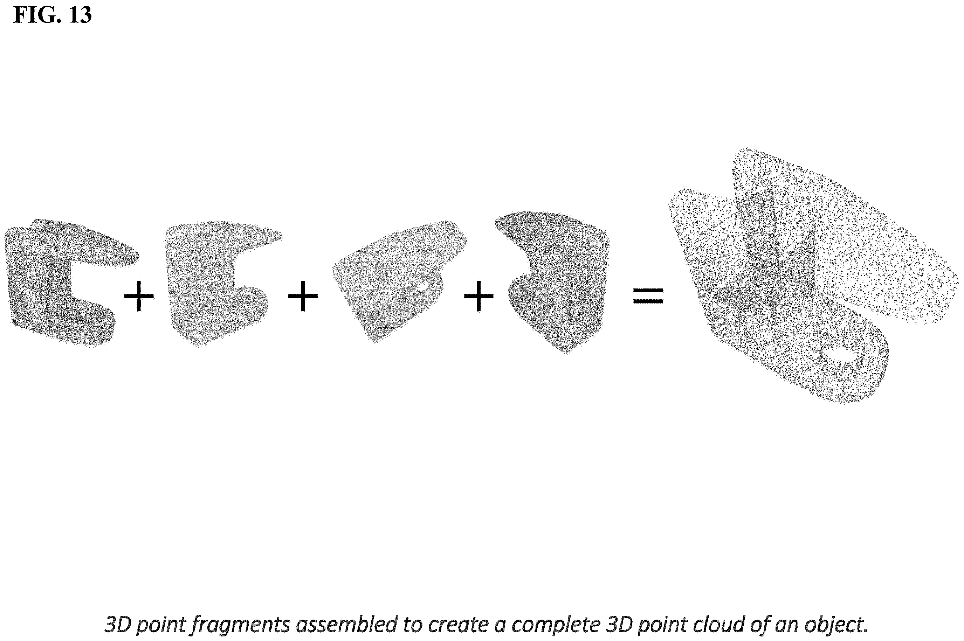

FIG. 13 is an illustrative example of combining a plurality of partial 3D representations to obtain a constituent 3D representation of the object-of-interest.

With this said, the features and examples above are not meant to limit the scope of the present disclosure to a single embodiment, as other embodiments are possible by way of interchange of some or all of the described or illustrated elements. Moreover, where certain elements of the present disclosure may be partially or fully implemented using known components, only those portions of such known components that are necessary for an understanding of the present disclosure are described, and detailed descriptions of other portions of such known components are omitted so as not to obscure the disclosure. In the present disclosure, an embodiment showing a singular component should not necessarily be limited to other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

The foregoing description of the specific embodiments so fully reveals the general nature of the disclosure that others may, by applying knowledge within the skill of the relevant art(s) (including the contents of the documents cited and incorporated by reference herein), readily modify and/or adapt for various applications such specific embodiments, without undue experimentation and without departing from the general concept of the present disclosure. Such adaptations and modifications are therefore intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance presented herein, in combination with the knowledge of one skilled in the relevant art(s).

While the above-described implementations have been described and shown with reference to particular operations performed in a particular order, it will be understood that these operations may be combined, sub-divided, or re-ordered without departing from the teachings of the present technology. The operations may be executed in parallel or in series. Accordingly, the order and grouping of the operations is not a limitation of the present technology.

While various embodiments of the present disclosure have been described above, it should be understood that they have been presented by way of example, and not limitations. It would be apparent to one skilled in the relevant art(s) that various changes in form and detail could be made therein without departing from the spirit and scope of the disclosure. Thus, the present disclosure should not be limited by any of the above-described representative embodiments but should be defined only in accordance with the following claims and their equivalents.

**Claims**

1. A computer-implemented method for obtaining partial three-dimensional (3D) data from an object-of-interest to generate a machine learning 3D objects training dataset, the method comprising:

   accessing the object-of-interest;
   providing an imaging system;
   applying at least a first operation on (i) the object-of-interest and/or (ii) the imaging system, the at least first operation executing a displacement-related function to the (i) the object-of-interest and/or (ii) the imaging system;
   in response to the at least first operation, obtaining at least one partial 3D representation of the object-of-interest by the imaging system; and

   supplying the obtained at least one partial 3D representation to the 3D objects training dataset.

2. The method of claim 1, wherein the imaging system is configured to obtain a plurality of the partial 3D representations of the object-of-interest, in which the obtained plurality of the partial 3D representations are combined, integrated, and/or overlapped to generate a constituent 3D reconstruction of the object-of-interest.

3. The method of claim 2, wherein distances between the plurality of the partial 3D representations of the object-of-interest is limited to facilitate the generation of the constituent 3D reconstruction.

4. The method of claim 1, wherein the object-of-interest is synthetic and/or non-synthetic.

5. The method of claim 1, wherein the imaging system is real and/or virtual.

6. The method of claim 1, wherein the object-of-interest is non-rigid and contains at least one movable articulation.

7. The method of claim 6, wherein the at least one movable articulation of the object-of-interest comprises at least one degree of freedom.

8. The method of claim 1, wherein the accessing of the object-of-interest includes retrieving a 3D representative image of the object-of-interest stored in a 3D point cloud.

9. The method of claim 1, wherein the at least first operation applied to the (i) object of interest comprises one or more of the following actions: rotation, gimbal-type lock rotations, position, displacement, articulation, geometric transformation, scale, translation, orientation, shape deformation, aiming point, and/or any combination thereof.

10. The method of claim 1, wherein the at least first operation applied to the (ii) the imaging system comprises one or more of the following actions: rotation, spherical coordinate orientation, position, displacement, articulation, geometric transformation, scale, translation, orientation, shape deformation, aiming point, focal length, focal length range, pixel size, sensor size, position of the principal point, lens distortion, intrinsic parameters, extrinsic parameters, and/or any combination thereof.

11. The method of claim 1, wherein the at least first operation applied to (i) the object-of-interest is randomized such that the object-of-interest is positionally varied while the imaging system remains positionally fixed and wherein the randomization of the at least first operation applied to (i) the object-of-interest is limited to constrain the displacement-related function to provide incremental positional changes of the (i) object-of-interest to obtain a plurality of partial 3D representations of the object-of-interest.

12. The method of claim 1, wherein the at least first operation applied to (ii) the imaging system is randomized such that the imaging system is positionally varied while the object-of-interest remains positionally fixed and wherein the randomization of the at least first operation is limited to constrain the displacement-related function to provide incremental positional changes of (ii) the imaging system to obtain a plurality of partial 3D representations of the object-of-interest.

13. The method of claim 1, further comprising applying a machine learning algorithm (MLA) to the supplied 3D objects training dataset based on the obtained at least one partial 3D representation to obtain at least one of identification, segmentation, completion, and/or classification of the object-of-interest.

14. The method of claim 1-13, wherein the at least one operation is applied to the at least one object-of-interest and/or the at least on partial 3D representation and/or the at least one constituent 3D representation includes:

> an augmentation routine comprising randomly selecting an execution order of at least one of (i) adding a noise to the point cloud of the at least one object-of-interest, (ii) applying a geometric transformation on the point cloud of the at least one object-of-interest, and/or (iii) applying a degradation on the point cloud of the at least one object-of-interest; and
> applying the randomly selected execution order of steps (i) to (iii) on the point cloud of the at least one object-of-interest and/or the at least on partial 3D representation and/or the at least one constituent 3D representation.

15. A system for obtaining partial three-dimensional (3D) data from an object-of-interest to generate a machine learning 3D objects training dataset, the system comprising:

> an input/output (I/O) interface component configured to enable the transmission and reception of wired or wireless network communications;
> a memory component configured to store computer-readable executable instructions;
> a processing component, communicatively coupled to the I/O interface component and the memory component, the processing component configured to execute the stored computer-readable instructions to actuate execution of the method claims 1-14.

Synthetic 3D object

FIG. 1A

3D point cloud
of an object

FIG. 1B

3D mesh representation
of an object

FIG. 1C

**FIG. 2**

## FIG. 3A

Camera position is defined by its position in a 3D Cartesian coordinate system (e.g., $x_1$, $y_1$, $z_1$)

$(x_1, y_1, z_1)$

$(x_2, y_2, z_2)$

Aiming point position is defined by its position in a 3D Cartesian coordinate system (e.g., $x_2$, $y_2$, $z_2$)

EP 4 379 667 A1

FIG. 3B

$(x_1, y_1, z_1)$

$(x_2, y_2, z_2)$

$(x_3, y_3, z_3)$

*FIG. 4A*

FIG. 4B

FIG. 5

FIG. 6

FIG. 7

FIG. 8

**FIG. 9**

Camera
positions on a
shape

*Cameras positioned on any 3D shape.*

## FIG. 10

Single camera point-of-view (POV) of a randomly positioned and oriented synthetic 3D point cloud.

EP 4 379 667 A1

FIG. 11

**FIG. 12**

1201 Displacement generator

1208 Parameter limiter

1202 Object of interest

1203 Imaging system
Partial
3D representation

1204 Registration module
Registered partial
3D representation

1205 Reconstruction module

1206 Training dataset

Reconstructed 3D point cloud

1207 Machine Learning Algorithm (MLA) Module

1200

EP 4 379 667 A1

**FIG. 13**

*3D point fragments assembled to create a complete 3D point cloud of an object.*

Europäisches
Patentamt

European
Patent Office

Office européen
des brevets

# EUROPEAN SEARCH REPORT

**Application Number**

EP 22 21 0641

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHARLES R QI ET AL: "PointNet: Deep Learning on Point Sets for 3D Classification and Segmentation", ARXIV.ORG, CORNELL UNIVERSITY LIBRARY, 201 OLIN LIBRARY CORNELL UNIVERSITY ITHACA, NY 14853, 2 December 2016 (2016-12-02), XP080736277, DOI: 10.1109/CVPR.2017.16 | 1,4-7, 9-13,15 | INV. G06T15/20 G06T17/00 |
| Y | * abstract; figures 1, 3 * | 2,3 | |
| A | * section 5.1 * | 8,14 | |
| Y | ZHANG XUETAO ET AL: "A method of partially overlapping point clouds registration based on differential evolution algorithm", PLOS ONE, vol. 13, no. 12, 21 December 2018 (2018-12-21), page e0209227, XP093033264, DOI: 10.1371/journal.pone.0209227 Retrieved from the Internet: URL:https://www.ncbi.nlm.nih.gov/pmc/articles/PMC6303034/pdf/pone.0209227.pdf> * abstract * | 2,3 | |
| A | GSCHWANDTNER MICHAEL ET AL: "BlenSor: Blender Sensor Simulation Toolbox", 26 September 2011 (2011-09-26), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 199 – 208, XP047447244, ISBN: 978-3-540-74549-5 * abstract * | 1-15 | |

**TECHNICAL FIELDS SEARCHED (IPC)**

G06T

The present search report has been drawn up for all claims

| Place of search | Date of completion of the search | Examiner |
|---|---|---|
| Berlin | 21 March 2023 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)